# EUROPEAN PATENT APPLICATION

(11) **EP 4 703 780 A1**
(43) Date of publication of application: **04.03.2026**
(21) Application number: 23935450.9
(22) Date of filing: 14.12.2023
(51) Int. Cl.: G02B 6/36, B08B 1/32

(54) **OPTICAL CONNECTOR CLEANING IMPLEMENT**

(30) Priority: 26.04.2023 JP 2023072526
(71) Applicant: Fujikura Ltd., Tokyo 135-8512 (JP)
(72) Inventor: WATANABE, Junya, Sakura-shi, Chiba 285-8550 (JP)
(74) Representative: Ter Meer Steinmeister & Partner
(86) International application number: PCT/JP2023/044936
(87) International publication number: WO 2024/224679

(57) **Abstract**

An optical connector cleaning tool 1 includes a cleaning shaft 10 that includes a pressing surface 111 and that holds a cleaning element 5 so that the cleaning element 5 is turned back at the pressing surface 111 that presses the cleaning element 5 against a connection end surface 111 of an optical connecter 80, and a guide nozzle 30 that accommodates the cleaning shaft 10. The guide nozzle 30 includes a front end portion 31 having an inner diameter that is deformable.

## Description

### [TECHNICAL FIELD]

The present invention relates to an optical connector cleaning tool that cleans a connection end surface of an optical connector.

For designated countries that are permitted to be incorporated by reference in the literature, the contents of Japanese Patent Application No. 2023-072526 filed with Japan Patent Office on April 26, 2023 is incorporated herein by reference and is regarded as a part of the description of this specification.

### [BACKGROUND ART]

An optical connector cleaning tool is known that is capable of cleaning in both of one case in which the optical connector plug is directly cleaned and the other case in which the optical connector plug attached to the adapter is cleaned (refer to, for example, Patent Document 1).

When using this optical connector cleaning tool, the optical connector plug can be directly cleaned by attaching a tubular cap to the front end of the optical connector cleaning tool and inserting the optical connector plug into this cap. On the other hand, the optical connector plug attached to an adapter can be cleaned by inserting the front end of the optical connector cleaning tool without the cap into the adapter.

### [CITATION LIST]

### [PATENT DOCUMENT]

PATENT DOCUMENT 1: JP 2010-191465 A

### [SUMMARY OF THE INVENTION]

### [PROBLEMS TO SOLVED BY INVENTION]

The cleaning work using the optical connector cleaning tool described above has a problem that the attaching and detaching of the cap occurs according to the state of the optical connector and the working efficiency of the cleaning work of the optical connector is affected.

An object of the present invention is to provide an optical connector cleaning tool that is capable of improving the efficiency of the cleaning work of an optical connector.

### [MEANS FOR SOLVING PROBLEM]

[1] An aspect 1 of the present invention is an optical connector cleaning tool that cleans a connection end surface of an optical connector, the optical connector cleaning tool comprising: a cleaning shaft that comprises a pressing surface and that holds a cleaning element so that the cleaning element is turned back at the pressing surface that presses the cleaning element against the connection end surface; and a tubular member that accommodates the cleaning shaft, wherein the tubular member comprises a front end portion having an inner diameter that is deformable.
[2] An aspect 2 of the present invention may be the optical connector cleaning tool of the aspect 1, wherein the front end portion may be elastically deformed to expand the inner diameter.
[3] An aspect 3 of the present invention may be the optical connector cleaning tool of the aspect 1or 2, wherein the inner diameter in a normal state may have a size to allow a ferrule of the optical connector to be inserted into the front end portion, and the inner diameter in an expanding state may have a size to allow a tubular part holding the ferrule to be inserted into the front end portion.
[4] An aspect 4 of the present invention may be the optical connector cleaning tool of the aspect 3, wherein the tubular part may be disposed in a receiving member capable of receiving a counterpart optical connector.
[5] An aspect 5 of the present invention may be the optical connector cleaning tool of any one of the aspects 1 to 4, wherein the front end portion may be divided into a plurality of movable pieces, and the plurality of movable pieces may be elastically deformed toward a radial outside of the tubular member to expand the inner diameter.
[6] An aspect 6 of the present invention may be the optical connector cleaning tool of any one of the aspects 1 to 5, wherein the front end portion may comprise a slit extending in a longitudinal direction of the tubular member, and the front end portion may be elastically deformed and a width of the slit may be widened to expand the inner diameter.
[7] An aspect 7 of the present invention may be the optical connector cleaning tool of any one of the aspects 1 to 6, wherein the tubular member may comprise a main body portion to which the front end portion is connected, and the front end portion may be made of an elastic material having a Young's modulus smaller than a Young's modulus of a material of which the main body portion is made.
[8] An aspect 8 of the present invention may be the optical connector cleaning tool of any one of the aspects 1 to 7, wherein the front end portion may comprise a tapered surface at an opening of the tubular member, and a tubular part holding a ferrule of the optical connector may contact the tapered surface to expand the inner diameter of the front end portion.

### [EFFECT OF THE INVENTION]

In the present invention, the front end portion of the tubular member accommodating the cleaning shaft has a deformable inner diameter, and therefore it is not necessary to attach and detach the cap and it is possible to improve the efficiency of the cleaning work of the optical connector.

### [BRIEF DESCRIPTION OF DRAWING(S)]

FIG. 1 is a front view showing the optical connector plug as a cleaning object of the optical connector cleaning tool in the embodiment of the present invention;
FIG. 2 is a schematic cross-sectional view showing the overall configuration of the optical connector cleaning tool in the embodiment of the present invention;
FIG. 3(a) is a front view showing the front end portions of the cleaning shaft and the guide nozzle in the embodiment of the present invention, and FIG. 3(b) is a cross-sectional view taken along line IIB-IIB in FIG 3(a);
FIG. 4 is a perspective view showing a modified example of the front end portion of the guide nozzle in the embodiment of the present invention;
FIG.5(a) and FIG.5(b) are diagrams for explaining a method of directly cleaning the optical connector plug in a single state using the optical connector cleaning tool in the embodiment of the present invention, FIG. 5(a) is a diagram showing a state before the optical connector cleaning tool is inserted into the optical connector plug, and FIG. 5(b) is a diagram showing a state in which the optical connector cleaning tool is inserted into the optical connector plug;
FIG. 6(a) and FIG. 6(b) are diagrams for explaining a method of cleaning the optical connector plug in a state of being attached to the adapter using the optical connector cleaning tool in the embodiment of the present invention, FIG. 6(a) is a diagram showing a state before the optical connector cleaning tool is inserted into the adapter, and FIG. 6(b) is a diagram showing a state in which the optical connector cleaning tool is inserted into the adapter; and
FIG. 7(a) is a perspective view showing the front end portion of the guide nozzle in the state of FIG. 5(b), and FIG. 7(b) is a perspective view showing the front end portion of the guide nozzle in the state of FIG. 6(b).

### [MODE(S) FOR CARRYING OUT THE INVENTION]

Hereinafter, embodiments of the invention will be described with reference to the drawings.

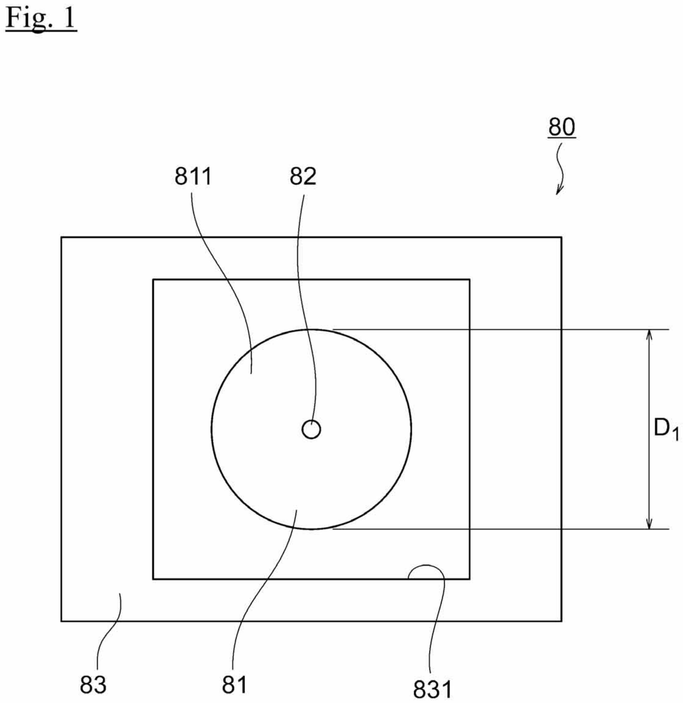

The optical connector cleaning tool 1 in the present embodiment is a cleaner that cleans a connection end surface of an optical connector that connects optical fibers. FIG. 1 is a front view showing the optical connector plug 80 as a cleaning object of the optical connector cleaning tool 1 in the embodiment of the present invention. The optical connector plug 80 corresponds to an example of the "optical connector" in the aspect of the present invention.

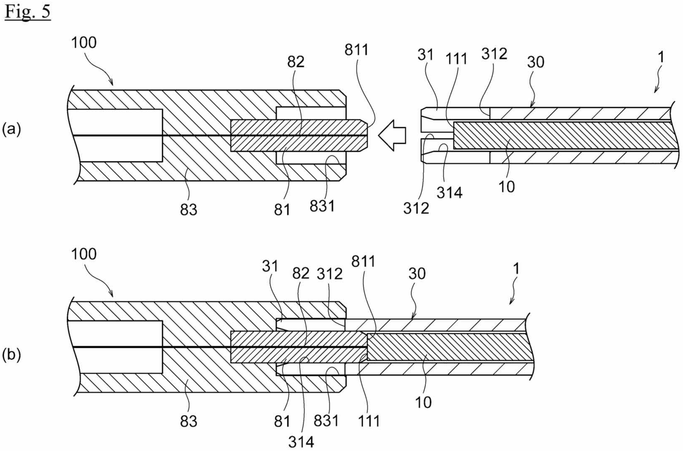

As shown in FIG. 1, the optical connector plug 80 that is a cleaning object of the optical connector cleaning tool 1 includes a ferrule 110 having a cylindrical shape with an outer diameter D₁. The ferrule 81 is made of, for example, zirconia (zirconium oxide). The ferrule 81 has a fiber holding hole penetrating the ferrule 81 in the longitudinal direction thereof (refer to FIG. 5(a) and FIG. 5(b)). An optical fiber 82 is inserted into the fiber holding hole, and the optical fiber 82 is fixed to the ferrule 81 with an adhesive or the like. The optical fiber 82 is exposed from the circular end face 811 of the ferrule 81. The ferrule 81 is held by a housing 83. The housing 83 is made of, for example, a resin material.

Although not particularly limited, as a specific example of the optical connector plug 80, the single-fiber connection type optical connector such as SC (Single - fiber Coupling) type optical connector specified in JIS C5973, FC (Fiber Connector) type optical connector specified in JIS C5970, MU (Miniature Universal) type optical connector specified in JIS C5983, LC (Lucent Connector) type optical connector, and the like can be exemplified.

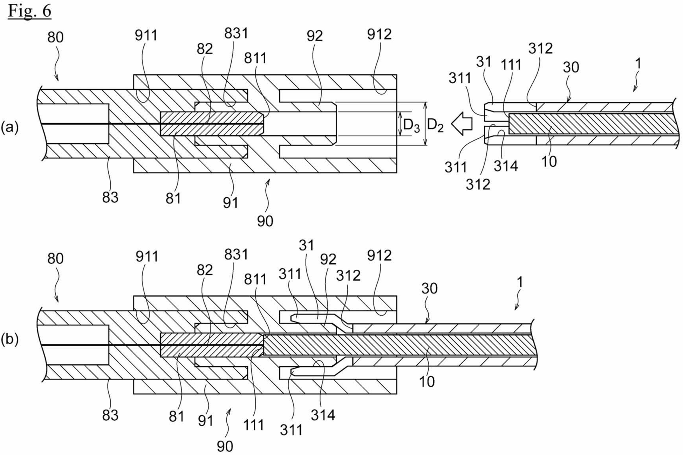

A pair of optical connector plugs 80 each including the ferrule 81 are connected to each other using an adapter 90 (refer to FIG. 6(a) and FIG. 6(b)) including a sleeve (tubular part) 92 into which the ferrule 81 can be inserted.

As shown in FIG. 6, the adapter 90 includes a housing 91 and a tubular part 92. The tubular part 92 is disposed in the housing 91 and is connected to the housing 91. The tubular part 92 has a cylindrical shape with an outer diameter D₂, and the inner hole thereof has an inner diameter D₃ (D₂>D₃). The inner diameter D₃ is slightly larger than the outer diameter D₁ of the ferrule 81 (D₃>D₁) and the ferrule 81 can be fitted to the tubular part 92. The tubular part 92 has two opposing openings, and the ferrules can contact each other by inserting the ferrules into the two openings. Although not particularly illustrated, the tubular part 92 includes an inner circumferential portion that contacts the ferrule 81 and an outer circumferential portion that covers the inner circumferential portion. The inner circumferential portion is made of, for example, zirconia, while the outer circumferential portion is made of, for example, a resin material. The housing 91 of the adapter 90 corresponds to an example of the "receiving member" in the aspect of the present invention.

When the pair of optical connector plugs 80 are inserted into the openings 911 and 912 on both sides of the housing 91 of the adapter 90, the ferrules 81 respectively enter the tubular part 92. Then, the optical fibers 82 exposed from the end faces 811 of the ferrules 81 are optically connected to each other by abutting the end faces 811 of the ferrules 81 of the pair of optical connector plugs 80 against each other in the tubular part 92.

If a contaminant such as dirt, dust, and oil is adhered to the end surface 811 of the ferrule 81 at the time of abutting, it may cause damage at the time of attaching and detaching, an increase in transmission loss, and the like. Therefore, the end surface 811 of the ferrule 81 is cleaned using the optical connector cleaning tool 1 described below before the optical connector plugs 80 are connected.

The optical connector cleaning tool 1 of the present embodiment can directly clean the optical connector plug 80 in a single state (a state in which the optical connector plug is not attached to the adapter 90) and can also clean the optical connector plug 80 in a state in which the optical connector plug is attached to the adapter 90 without the above-described cap attaching/detaching operation. That is, this optical connector cleaning tool 1 is capable of cleaning the connection end surface 811 of the optical connector plug 80 without using the cap regardless of the state of the optical connector plug 80.

Specifically, when directly cleaning the optical connector plug 80 in a single state, the end face 811 of the ferrule 81 of the optical connector plug 80 is cleaned by inserting the front end portion of the optical connector cleaning tool 1 into the opening 831 of the optical connector plug 80 (refer to FIG. 5(a) and FIG. 5(b)). On the other hand, when cleaning the optical connector plug 80 attached to the adapter 90, the end face 811 of the ferrule 81 of the optical connector plug 80 is cleaned by inserting the optical connector cleaning tool 1 into the other opening 912 of the adapter 90 with one opening 911 into which the optical connector plug 80 is inserted (see FIGS. 6(a) and 6(b)).

Although the optical connector plug 80 described above is an optical connector plug used in the plug-adapter-plug coupling system, the end surface of the ferrule of the optical connector receptacle used in the plug-receptacle coupling system may be cleaned using the optical connector cleaning tool 1 described below.

Although not particularly illustrated, similarly to the adapter 90 described above, the optical connector receptacle also includes a housing and a tubular part. The tubular part is disposed in the housing and is connected to the housing. In the optical connector receptacle, the ferrule attached to the front end of the optical fiber is incorporated into the tubular part.

The tubular part has the same shape as the tubular part 92 of the adapter 90 described above. The tubular part has the same outer diameter D₂ as the outer diameter D₂ of the tubular part 92 and has the same inner diameter D₃ as the inner diameter D₃ of the tubular part 92. Therefore, the ferrule of the counterpart optical connector plug can be fitted to the tubular part. The tubular part includes an inner circumferential portion that contacts the ferrule 81 and an outer circumferential portion that covers the inner circumferential portion. The inner circumferential portion is made of, for example, zirconia, while the outer circumferential portion is made of, for example, a resin material. The optical connector receptacle corresponds to an example of the "optical connector" in the aspect of the present invention, and the housing of the optical connector receptacle corresponds to an example of the "receiving member" in the aspect of the present invention.

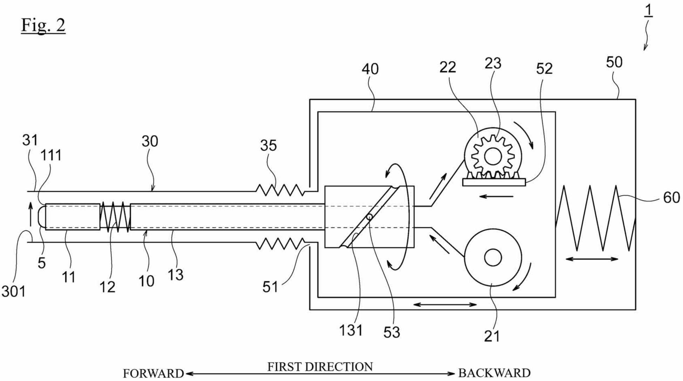

Hereinafter, the configuration of the optical connector cleaning tool 1 in the present embodiment will be described in detail with reference to FIG. 2 to FIG. 3(b).

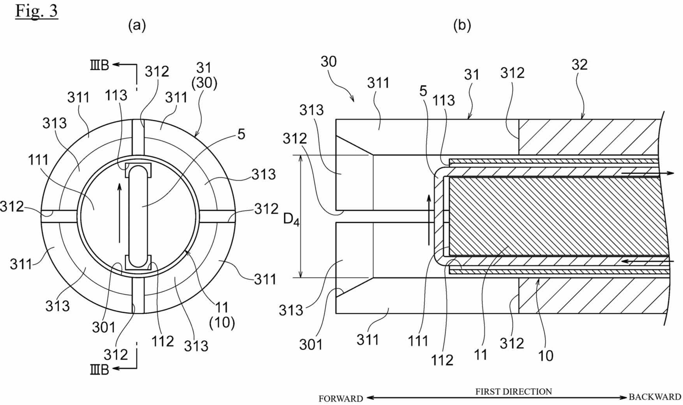

FIG. 2 is a schematic cross-sectional view showing the overall configuration of the optical connector cleaning tool 1 in the present embodiment. FIG. 3(a) is a front view showing the front end portions of the cleaning shaft 10 and the guide nozzle 30 in the present embodiment, and FIG. 3(b) is a cross-sectional view taken along line IIB-IIB in FIG 3(a).

As shown in FIG. 2, the optical connector cleaning tool 1 (hereinafter, also simply referred to as "cleaner 1") in the present embodiment includes a cleaning shaft 10, a feeding bobbin 21, a winding bobbin 22, a guide nozzle 30, a support body 40, a housing 50, and a first biasing member 60. The optical connector cleaning tool 1 cleans the optical connector plug 80 by pressing the cleaning element 5, which is held by the cleaning shaft 10, against the connection end face 811 of the ferrule 81 of the optical connector plug 80 by the pressing surface 111 (described later) of the cleaning shaft 10.

The cleaning element 5 is a continuous body obtained by processing a cleaning cloth into a thread or string shape. As a specific example of the cleaning cloth, for example, a nonwoven fabric or a woven fabric made of ultrafine fibers such as polyester and nylon can be exemplified. Although the cleaning element 5 of the present embodiment has a circular cross-sectional shape, the cross-sectional shape of the cleaning element 5 is not limited to this and may be, for example, a polygonal cross-sectional shape. Although not particularly limited, the cleaning element 5 has a diameter of 0.1 mm to 1 mm, and preferably has a diameter of 0.2 to 0.3 mm. A narrow tape-like continuous body element obtained by processing the cleaning cloth into a band shape may be used as the cleaning element 5.

The cleaning shaft 10 is an elongate member for pressing the cleaning element 5 against the connection end surface 811 of the optical connector plug 80. The cleaning element 5 is held by the cleaning shaft 10 so that the cleaning element 5 is turned back at the pressing surface 111. The unused cleaning element 5 is supplied from the feeding bobbin 21 to the cleaning shaft 10. Then, the cleaning element 5 used on the pressing surface 111 is collected to the winding bobbin 22. The cleaning shaft 10 includes a cleaning head (head member) 11, a second biasing member 12, and a shaft main body 13.

Although the cleaning shaft 10 includes a plurality of members 11 to 13 in the present embodiment, the number of members constituting the cleaning shaft 10 is not particularly limited to this. For example, the cleaning head 11, the second biasing member 12, and the shaft body 13 may be formed integrally from a resin material to form the cleaning shaft 10 as a single member.

The cleaning head 11 is a member that forms the front end portion of the cleaning shaft 10. As shown in FIG. 3(a) and FIG. 3(b), the cleaning head 11 has a pressing surface 111 at its front end for pressing the cleaning element 5 against the connection end surface 811 of the optical connector plug 80. The pressing surface 111 has a circular shape to correspond to the shape of the connection end surface 811 of the ferrule 81 of the optical connector plug 80 as a cleaning object.

A pair of guide holes 112 and 113 are formed in the pressing surface 111, and the cleaning element 5 can pass through the inside of the cleaning shaft 10. The unused cleaning element 5 sent out from the feeding bobbin 21 passes through the inside of the cleaning shaft 10 and one guide hole 112 and is supplied to the pressing surface 111. The cleaning element 5 supplied to the pressing surface 111 passes over the center of the pressing surface 111 and moves on the pressing surface 111 toward the other guide hole 113. The used cleaning element 5 passes through the other guide hole 113 and the inside of the cleaning shaft 10 and is wound up on the winding bobbin 22. Instead of the above-mentioned guide holes 112 and113, a pair of guide grooves may be formed on the side surface of the cleaning head 11, and the cleaning element 5 may be supplied to and collected from the pressing surface 111 through the guide grooves.

As shown in FIG. 2, the cleaning head 11 is supported by the cleaning shaft 13 to be relatively movable in the first direction. Here, the first direction is an insertion/removal direction of the cleaner 1 with respect to the optical connector plug 80, the adapter 90, or the optical connector receptacle at the time of cleaning and is also an axial direction (longitudinal direction) of the cleaning shaft 10. The second biasing member 12 is interposed between the cleaning head 11 and the cleaning shaft 13. The second biasing member 12 biases the cleaning head 11 forward with respect to the shaft main body 13, and the pressing surface 111 of the cleaning head 11 can press the cleaning element 5 against the connection end surface 811 of the optical connector plug 80 with an appropriate pressing force. As a specific example of the second biasing member 12, an elastic body such as a spring or a rubber can be exemplified, and as a specific example of the spring, a coil spring or the like can be exemplified. Although not particularly illustrated, the cleaning shaft 10 includes a guide mechanism that guides the relative movement of the cleaning head 11 with respect to the shaft main body 13 in the first direction.

The guide nozzle 30 is a tubular member that accommodates the cleaning shaft 10 described above. The ferrule 81 of the optical connector plug 80, the tubular part 92 of the adapter 90, or the tubular part of the optical connector receptacle is inserted into the opening 301 on the front end side of the guide nozzle 30. As shown in FIG. 3(a) and FIG. 3B, the guide nozzle 30 includes a front end portion 31 having the opening 301 and a main body portion 32 connected to the front end portion 31.

In the present embodiment, the front end portion 31 is divided into a plurality of (four in the present embodiment) movable pieces 311, and slits 312 are formed between the movable pieces 311. Each of the slits 312 extends in the first direction and opens at the front end side part. Each of the movable pieces 311 is supported by the main body portion 32 and can be elastically deformed, and the connection portion of the movable piece 311 with the main body portion 32 is a fixed end. These movable pieces 311 are elastically deformed toward the outer side in the radial direction of the guide nozzle 30 to expand the inner diameter of the front end portion 31. In other words, the front end portion 31 is elastically deformed and the width of each slit 312 is widened to expand the inner diameter of the front end portion 31.

In a normal state (unexpanded state), the front end portion 31 has an inner diameter D₄ that is slightly larger than the outer diameter D₁ of the ferrule 81 of the optical connector plug 80 (D₄>D₁), and the front end portion 31 can be fitted to the ferrule 81. The normal inner diameter D₄ of the front end portion 31 is smaller than the outer diameter D₂ (refer to FIG. 6(a)) of the tubular part 92 of the adapter 90 described above (D₄<D₂). Although not particularly limited, the normal inner diameter D₄ of the front end portion 31 is substantially the same as the inner diameter D₃ (refer to FIG. 6(a)) of the tubular part 92 of the adapter 90 described above or the tubular part of the optical connector receptacle (D₄=D₃).

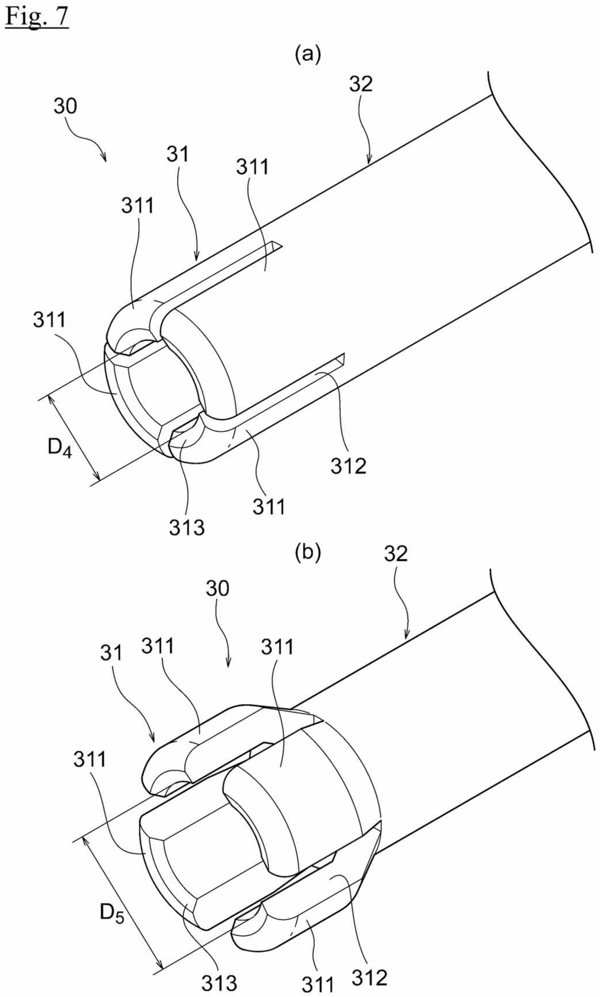

On the other hand, the inner diameter D₅ (refer to FIG. 7(b)) of the front end portion 31 in an expanded state is slightly larger than the outer diameter D₂ (see FIG. 6(a)) of the tubular part 92 of the adapter 90 or the tubular part of the optical connector receptacle described above (D₅>D₂). Therefore, it is possible to insert the tubular part 92 of the adapter 90 or the tubular part of the optical connector receptacle into the expanded front end portion 31. The expanded inner diameter D₅ of the front end portion 31 in the expanded state is larger than the inner diameter D₄ in the normal state described above (D₅>D₄).

The number of movable pieces 311 included in the front end portion 31 is not particularly limited to the above. Further, although the front end portion 31 has four slits 312 in the present embodiment, the number of slits 312 is not particularly limited to this and is set according to the number of movable pieces 311. Furthermore, the slits 312 having a width may not be formed between the movable pieces 311, and for example, the ends of adjacent movable pieces 311 may overlap each other.

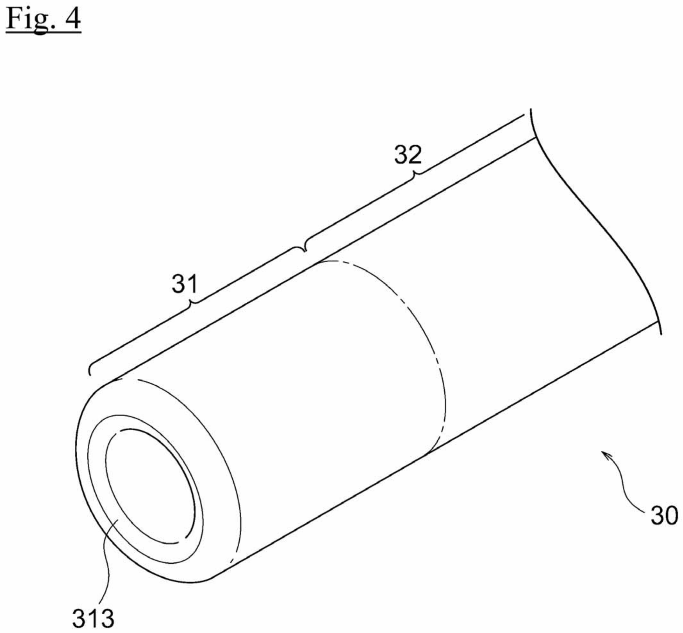

The configuration of the front end portion 31 is not particularly limited to the above as long as the inner diameter of the front end portion 31 can be expanded by elastic deformation of the front end portion 31. For example, as shown in FIG. 4, the front end portion 31 may not have a slit 312, and may be made of a material having an elastic material having the Young's modulus smaller than the Young's modulus of the material of which the main body portion 32 is made. Although not particularly limited, for example, the front end portion 31 is made of rubber that is easier to elastically deform than the resin material of which the main body portion 32 is made. FIG. 4 is a perspective view showing a modified example of the front end portion 31 of the guide nozzle 30 in the present embodiment. The front end portion 31 shown in FIG. 4 may be divided into a plurality of movable pieces, and slits may be formed between the plurality of movable pieces.

As long as the inner diameter of the front end portion 31 is deformable, elastic deformation may not be used. For example, the front end portion 31 may include a diaphragm mechanism such as that used in an imaging optical system such as a camera. Although not particularly illustrated, the diaphragm mechanism can expand the diameter of the opening defined by the blades without using elastic deformation by using a cam to synchronously rotate a plurality of blades each of which can rotate around the rotation axis.

As shown in FIG. 3(a) and FIG. 3(b), the front end portion 31 has a tapered surface 313 at the opening 301 of the guide nozzle 30. The tapered surface 313 is formed at the front end of the inner surface of the front end portion 31. The tapered surface 313 is inclined toward the inside of the guide nozzle 30 as approaching the rear end of the guide nozzle 30 from the front end of the guide nozzle 30. When cleaning the optical connector plug 80 attached to the adapter 90, the front end portion 31 is pushed and widened by the tubular part 92 of the adapter 90 following the tapered surface 313, and therefore the inner diameter of the front end portion 31 is easily expanded.

Returning to FIG. 2, the guide nozzle 30 is supported by the support body 40 to be movable in the first direction. As a result, the cleaning shaft 10 is movable with respect to the guide nozzle 30 in the first direction, and the front end portion of the cleaning shaft 10 can protrude from the guide nozzle 30 or retract into the guide nozzle 30. The rear end portion of the cleaning shaft 10 accommodated in the guide nozzle 30 is located in the support body 40. The third biasing member 35 is interposed between the guide nozzle 30 and the support body 40. As a specific example of the third biasing member 35, an elastic body such as a spring or a rubber can be exemplified, and as a specific example of the spring, a coil spring or the like can be exemplified. Although not particularly illustrated, the optical connector cleaning tool 1 includes a guide mechanism that guides the relative movement of the guide nozzle 30 with respect to the support body 40 in the first direction.

The cleaning shaft 10 is supported by the support body 40 to be rotatable around the axis along the first direction. Although not particularly illustrated, the cleaning shaft 10 includes a locking structure that stops the relative rotation of the cleaning head 11 with respect to the shaft main body 13.

The feeding bobbin 21 and winding bobbin 22 described above are also accommodated in the support body 40. The bobbins 21 and 22 are rotatably supported by the support body 40. As shown in FIG. 2, both bobbins 21 and 22 can rotate only clockwise in the figure, and the counterclockwise rotation is restricted by a ratchet mechanism not shown. As long as the bobbins 21 and 22 can rotate only in one direction, the bobbins 21 and 22 may rotate only in the counterclockwise direction, and the clockwise rotation of the bobbins 21 and 22 may be restricted.

The support body 40 is accommodated in the housing 50 to be relatively movable in the first direction. An opening 51 is formed in the housing 50, and the guide nozzle 30 and the third biasing member 35 protrude forward from the housing 50 through the opening 51. Although not particularly illustrated, the optical connector cleaning tool 1 includes a guide mechanism that guides the relative movement of the support body 40 with respect to the housing 50 in the first direction.

The first biasing member 60 is interposed between the support body 40 and the housing 50. The first biasing member 60 biases the support body 40 forward with respect to the housing 50. As a specific example of the first biasing member 60, an elastic body such as a spring or a rubber can be exemplified, and as a specific example of the spring, a coil spring or the like can be exemplified.

The winding bobbin 22 supported by the support body 40 has a pinion gear 23. The housing 50 has a rack gear 52 meshing with the pinion gear 23. When the support body 40 relatively moves with respect to the housing 50 in the first direction, the linear motion is converted into a rotation motion by the rack gear 52 and the pinion gear 23, the winding bobbin 22 rotates, and therefore the cleaning element 5 used on the pressing surface 111 of the cleaning shaft 10 is wound around the winding bobbin 22. Further, since the feeding bobbin 21 is rotated by the tension acting on the cleaning element 5 in accordance with the winding movement, the unused cleaning element 5 is fed from the feeding bobbin 21 to the pressing surface 111 of the cleaning shaft 10.

A spiral cam groove 131 is formed on the outer peripheral surface of the rear end portion of the cleaning shaft 10. On the other hand, the housing 50 has a cam pin 53 inserted into the cam groove 131. When the support body 40 relatively moves with respect to the housing 50 in the first direction, the cam pin 53 relatively slides in the cam groove 131, and therefore, the cleaning shaft 10 rotates around a rotation axis along the first direction.

Next, a method of using the optical connector cleaning tool 1 described above will be described with reference to FIG. 5(a) to FIG. 7.

FIG.5(a) and FIG.5(b) are diagrams for explaining a method of directly cleaning the optical connector plug 80 in a single state using the optical connector cleaning tool 1 in the present embodiment, FIG. 5(a) is a diagram showing a state before the optical connector cleaning tool 1 is inserted into the optical connector plug 80, and FIG. 5(b) is a diagram showing a state in which the optical connector cleaning tool 1 is inserted into the optical connector plug 80. On the other hand, FIG. 6(a) and FIG. 6(b) are diagrams for explaining a method of cleaning the optical connector plug 80 in a state of being attached to the adapter 90 using the optical connector cleaning tool 1 in the present embodiment, FIG. 6(a) is a diagram showing a state before the optical connector cleaning tool 1 is inserted into the adapter 90, and FIG. 6(b) is a diagram showing a state in which the optical connector cleaning tool 1 is inserted into the adapter 90. FIG. 7(a) is a perspective view showing the front end portion 31 of the guide nozzle 30 in the state of FIG. 5(b), and FIG. 7(b) is a perspective view showing the front end portion 31 of the guide nozzle 30 in the state of FIG. 6(b). The cleaning element 5 is omitted in FIG. 5(a) to FIG. 6(b).

When directly cleaning the optical connector plug 80 in a single state, as shown in FIG. 5(a) and FIG. 5(b), the operator first inserts the front end portion 31 of the guide nozzle 30 of the cleaner 1 into the opening 831 of the housing 83 of the optical connector plug 80 and inserts the ferrule 81 into the inner hole 314 of the front end portion 31 of the guide nozzle 30. As a result, the inner diameter of the front end portion 31 of the guide nozzle 30 is fitted to the outer diameter of the ferrule 81, and the pressing surface 111 of the cleaning shaft 10 is positioned with respect to the connection end surface 811 of the ferrule 81. At this time, as described above, since the front end portion 31 has the inner diameter D₄ slightly larger than the outer diameter D₁ of the ferrule 81 of the optical connector plug 80, the inner diameter of the front end portion 31 does not expand as shown in FIG. 7(a).

Then, when the operator pushes the front end portion 31 of the guide nozzle 30 of the cleaner 1 into the opening 831 of the optical connector plug 80, the pressing surface 111 of the cleaning shaft 10 presses the cleaning element 5 against the connection end face 811 of the optical connector plug 80. At this time, the cleaning head 11 is pressed by the reaction force from the connection end face 811 of the optical connector plug 80. As a result, the cleaning head 11 approaches the shaft main body 13, the second biasing member 12 is compressed, and therefore the cleaning element 5 is pressed against the connection end face 811 with an appropriate pressing force.

Next, when the operator pushes the housing 50 against the guide nozzle 30 in the first direction, the first biasing member 60 is compressed, and the rack gear 52 and pinion gear 23 rotate the winding bobbin 22. As a result, the used cleaning element 5 is collected from the pressing surface 111 of the cleaning shaft 10 to the winding bobbin 22, and the unused cleaning element 5 is supplied from the feeding bobbin 21 to the pressing surface 111. Therefore, the cleaning element 5 slides while being pressed against the connection end surface 811 of the optical connector plug 80, and the contaminant adhering to the connection end surface 811 is wiped.

At this time, the cam pin 53 of the housing 50 relatively slides inside the cam groove 131 of the cleaning shaft 10 by the above-mentioned pushing operation of the housing 50 with respect to the guide nozzle 30 by the operator, and the cleaning shaft 10 rotates around the rotation axis along the first direction. Therefore, even if the width of the thread-like or string-like cleaning element 5 is narrower than the connection end surface 811 to be cleaned, the contaminant can be wiped off from the entire area of the connection end surface 811. Although not particularly limited, the rotation angle of the cleaning shaft 10 is preferably 180 degrees or more.

Next, when the operator releases the pushing of the housing 50 with respect to the guide nozzle 30, the housing 50 moves backward with respect to the guide nozzle 30 by the elastic force of the first biasing member 60. At this time, since the ratchet mechanism (not shown) restricts the counterclockwise rotations in the figure of the bobbins 21 and 22, the bobbins 21 and 22 do not rotate.

On the other hand, the cam pin 53 of the housing 50 relatively slides inside the cam groove 131 of the cleaning shaft 10 by the releasing operation by the operator, and the cleaning shaft 10 rotates in the direction opposite to the rotation direction during the above-mentioned pushing operation.

When the cleaning is finished, the operator removes the cleaner 1 from the optical connector plug 80 by pulling out the front end portion 31 of the guide nozzle 30 of the cleaner 1 from the optical connector plug 80.

On the other hand, when cleaning the optical connector plug 80 in a state of being attached to the adapter 90, as shown in FIG. 6 (a) and FIG. 6 (b), the operator first inserts the front end portion 31 of the guide nozzle 30 of the cleaner 1 into the opening 912 of the housing 91 of the adapter 90. At this time, as described above, since the normal inner diameter D₄ of the front end portion 31 is smaller than the outer diameter D₂ of the tubular part 92 of the adapter 90, the end of the tubular part 92 of the adapter 90 abuts on the tapered surface 313 that is a part of the inner wall of the guide nozzle 30.

Then, when the operator pushes the front end portion 31 of the guide nozzle 30 of the cleaner 1, the movable piece 311 is elastically deformed toward the radial outside of the guide nozzle 30 by the tubular part 92 of the adapter 90 following the tapered surface 313. That is, the tubular part 92 is inserted into the inner hole 314 of the front end portion 31 while the inner diameter of the front end portion 31 is expanded. The front end portion 31 with the expanded inner diameter is shown in FIG. 7(b).

When the operator further pushes the front end portion 31 of the guide nozzle 30 from this state, the third biasing member 35 is compressed, and the cleaning head 11 protrudes from the guide nozzle 30. Then, the cleaning head 11 is inserted into the tubular part 92 of the adapter 90, and the pressing surface 111 of the cleaning shaft 10 is positioned with respect to the connection end surface 811 of the ferrule 81 located inside the tubular part 92, thereafter the cleaning shaft 10 presses the cleaning element 5 against the connection end surface 811. At this time, the cleaning head 11 approaches the shaft main body 13 by the reaction force from the connection end face 811 of the optical connector plug 80, the second biasing member 12 is compressed, and therefore the cleaning element 5 is pressed against the connection end face 811 with an appropriate pressing force.

Next, when the operator pushes the housing 50 against the guide nozzle 30 in the first direction, as in the case of the optical connector plug 80 in the single state described above, the cleaning element 5 slides while being pressed against the connection end surface 811 of the optical connector plug 80, and the contaminant adhering to the connection end surface 811 is wiped. At this time, the cleaning shaft 10 rotates around the rotation axis along the first direction. Then, when the operator releases the pushing of the housing 50 with respect to the guide nozzle 30, the operator removes the cleaner 1 from the optical connector plug 80 by pulling out the front-end portion 31 of the guide nozzle 30 of the cleaner 1 from the optical connector plug 80.

Although not particularly illustrated, when cleaning the connection end face of the ferrule included in the optical connector receptacle, the connection end face can be cleaned using the optical connector cleaning tool 1 in a manner similar to the manner of cleaning the optical connector plug 80 attached to the adapter 90 (the manner described above with reference to FIG. 6(a) and FIG. 6(b)).

As described above, in the present embodiment, since the front end portion 31 of the guide nozzle 30 accommodating the cleaning shaft 10 has a deformable inner diameter, it is possible to clean the connection end surface 811 of the optical connector plug 80 without using the cap regardless of the state of the optical connector plug 80. Therefore, it is not necessary to attach and detach the cap, and it is possible to improve the efficiency of the cleaning work of the optical connector plug 80.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

### [EXPLANATIONS OF LETTERS OR NUMERALS]

1 ... Optical connector cleaning tool
5 ... Cleaning element
10 ... Cleaning shaft
11 ... Cleaning head
111 ... Pressing surface
112, 113 ... Guide hole
12 ... Second Biasing member
13 ... Shaft main body
131 ... Cam groove
21 ... Feeding bobbin
22 ... Winding bobbin
23 ... Pinion gear
30 ... Guide nozzle
301 ... Opening
31 ... Front end portion
311 ... Movable piece
312 ... Slit
313 ... Tapered surface
32 ... Main body portion
35 ... Third Biasing member
40 ... Support body
50 ... Housing
51 ... Opening
52 ... Rack gear
53 ... Cam pin
60 ... First biasing member
80 ... Optical connector plug
81 ... Ferrule
811 ... Connection end surface
82 ... Optical fiber
83 ... Housing
831 ... Opening
90 ... Adaptor
91 ... Housing
911, 912 ... Opening
92 ... Tubular part

## Claims

1. An optical connector cleaning tool that cleans a connection end surface of an optical connector, the optical connector cleaning tool comprising:
a cleaning shaft that comprises a pressing surface and that holds a cleaning element so that the cleaning element is turned back at the pressing surface that presses the cleaning element against the connection end surface; and
a tubular member that accommodates the cleaning shaft, wherein
the tubular member comprises a front end portion having an inner diameter that is deformable.

2. The optical connector cleaning tool according to claim 1, wherein
the front end portion is elastically deformed to expand the inner diameter.

3. The optical connector cleaning tool according to claim 1 or 2, wherein
the inner diameter in a normal state has a size to allow a ferrule of the optical connector to be inserted into the front end portion, and
the inner diameter in an expanded state has a size to allow a tubular part holding the ferrule to be inserted into the front end portion.

4. The optical connector cleaning tool according to any one of claims 1 to 3, wherein
the front end portion is divided into a plurality of movable pieces, and
the plurality of movable pieces are elastically deformed toward a radial outside of the tubular member to expand the inner diameter.

5. The optical connector cleaning tool according to any one of claims 1 to 4, wherein
the front end portion comprises a slit extending in a longitudinal direction of the tubular member, and
the front end portion is elastically deformed and a width of the slit is widened to expand the inner diameter.

6. The optical connector cleaning tool according to any one of claims 1 to 5, wherein
the tubular member comprises a main body portion to which the front end portion is connected, and
the front end portion is made of an elastic material having a Young's modulus smaller than a Young's modulus of a material of which the main body portion is made.

7. The optical connector cleaning tool according to any one of claims 1 to 6, wherein
the front end portion comprises a tapered surface at an opening of the tubular member, and
a tubular part holding a ferrule of the optical connector contacts the tapered surface to expand the inner diameter of the front end portion.
